# FASCICULE DE BREVET EUROPEEN

(11) **EP 1 131 578 B1**
(45) Date de publication et mention de la délivrance du brevet: **10.11.2004**
(21) Numéro de dépôt: 99956071.7
(22) Date de dépôt: 18.11.1999
(51) Int. Cl.: F16L 33/02

(54) **AGRAFE DE LIAISON ET D'ENTRETOISEMENT POUR DEUX COLLIERS DE SERRAGE**
VERBINDUNGSKLAMMER UND ABSTANDSHALTER FÜR ZWEI SCHELLEN
CONNECTING AND BRACING CLIP FOR TWO CLAMP FITTINGS

(30) Priorité: 18.11.1998 FR 9814456
(43) Date de publication de la demande: 12.09.2001
(73) Titulaire: Etablissements CAILLAU, 92130 Issy-les-Moulineaux (FR)
(72) Inventeur: DETABLE, Pascal, Villedieu, 41130 Gievres (FR); ANDRE, Michel, F-41200 Romorantin-Lanthenay (FR)
(74) Mandataire: Intès, Didier Gérard André
(86) Numéro de dépôt international: PCT/FR1999/002825
(87) Numéro de publication internationale: WO 2000/029775

(56) Documents cités:
- FR-A- 2 452 656
- US-A- 3 174 777
- US-A- 4 093 282
- US-A- 4 607 867
- US-A- 5 368 337

## Description

La présente invention concerne une agrafe de liaison et d'entretoisement pour deux colliers de serrage, destinés à être disposés sur un objet à serrer et comprenant, chacun, une bande enroulée sur elle-même. L'invention concerne également un système de serrage comprenant deux colliers de serrage ainsi qu'une agrafe de liaison et d'entretoisement.

Les colliers de serrage sont couramment utilisés pour serrer une pièce, par exemple un tuyau en caoutchouc ou analogue, autour d'un autre, par exemple un embout rigide sur lequel est emmanché le tuyau. La liaison entre ces deux pièces, réalisée à l'aide du collier, doit souvent respecter des critères exigeants, par exemple en matière de résistance à l'arrachement des deux pièces l'une par rapport à l'autre ou en matière d'étanchéité entre ces deux pièces.

Ainsi, dans certains cas, il est apparu souhaitable de réaliser la liaison entre ces deux pièces non pas à l'aide d'un seul collier, mais à l'aide d'au moins deux colliers disposés l'un après l'autre dans le sens axial. Dans ce cas, l'efficacité de ces dispositions nécessite que l'espacement entre les deux colliers respecte une valeur déterminée, par exemple en fonction de la géométrie des pièces à serrer. Par ailleurs, il est souhaitable que la mise en place des deux colliers par rapport à l'objet à serrer soit aussi simple que possible.

Dans toute la suite, l'objet à serrer désignera l'ensemble devant être serré à l'aide des deux colliers (ou davantage) montés sur l'agrafe. Par exemple, l'ensemble constitué par le tuyau et l'embout sur lequel il est emmanché, constitue un "objet à serrer".

Le document US 5368337 montre une agrafe selon le préambule de la revendication 1 qui maintient deux colliers par leur cosse de serrage. FR 2452656 est également conforme au préambule de la revendication 1.

Le brevet US 4,093,282 montre comment assembler deux colliers à l'aide de deux agrafes de liaison du type précité.

Dans US 4,093,282, les deux colliers ont des diamètres différents et sont placés, l'un sur un tube rigide et l'autre sur un tuyau emmanché sur ce tube. Les deux agrafes sont pliées contre un épaulement que présente le tube, afin de s'adapter à la différence de diamètre entre les colliers. Ces pliages ont lieu lors de la mise en place des colliers et des agrafes sur le tube et le tuyau, ce qui complique cette dernière. Ils ne permettent pas de déterminer une position unique correcte des colliers par rapport aux objets qu'ils serrent puisque, tant que les colliers ne sont pas serrés de manière à déformer les agrafes, l'ensemble formé par les colliers et les agrafes peut être librement déplacé le long des objets à serrer.

L'invention a pour but d'améliorer le système précité en proposant une agrafe de liaison et d'entretoisement permettant de maintenir les deux colliers espacés l'un par rapport à l'autre selon un espacement donné et de simplifier la mise en place de ces colliers sur l'objet à serrer, tout en déterminant la position axiale correcte des colliers par rapport à cet objet.

L'invention est définie par la combinaison des caractéristiques de la revendication 1.

Avant leur mise en place sur l'objet à serrer, les colliers peuvent être assemblés à l'aide de l'agrafe conforme à l'invention en étant disposés dans les zones de support, ce qui permet de maintenir leur espacement. De plus, l'ensemble constitué par les deux colliers et l'agrafe qui les rassemble peut être manipulé comme un seul bloc pour la mise en place des colliers autour de l'objet à serrer.

Grâce aux dispositions spécifiques de l'invention cet ensemble peut être parfaitement positionné par rapport à l'objet à serrer, avant le serrage des colliers.

Ceci permet d'éviter qu'à aucun moment l'objet à serrer ne soit compressé dans des régions inappropriées. Par exemple, pour assurer la qualité de la liaison mécanique entre un tuyau et un tube, il peut être souhaitable que les zones de compression soient correctement placées par rapport à des indentations du tube non visibles de l'extérieur. Dans le même exemple, l'étanchéité de la liaison peut n'être assurée que si la compression intervient au droit des joints d'étanchéité.

Les moyens de retenue sont préformés sur l'agrafe, indépendamment de la mise en place de cette dernière sur l'objet à serrer. En d'autres termes, il n'est pas nécessaire de déformer l'agrafe lors de sa mise en place pour la caler par rapport audit objet.

Avantageusement, les moyens de retenue qui équipent l'agrafe comprennent au moins une déformation de retenue faisant saillie sur une face longitudinale de la bande dans laquelle est formée l'agrafe.

De son côté, l'objet à serrer présente une zone de retenue apte à coopérer avec les moyens de retenue de l'agrafe. Selon la conformation des moyens de retenue de l'agrafe, cette zone peut être formée sur un épaulement ou une extrémité libre dudit objet (par exemple sur une partie de l'embout dépassant du tuyau), ou encore sur un renfoncement, un bossage ou autre que présente sa surface.

Avantageusement la déformation de retenue est formée par une partie d'extrémité coudée sensiblement à angle droit par rapport à la direction longitudinale de l'agrafe.

Cette partie d'extrémité coudée permet de constituer une butée ) capable de coopérer avec la zone de retenue de l'objet à serrer (extrémité libre, épaulement...) pour déterminer le positionnement des deux colliers par rapport à cet objet et exercer une retenue axiale de serrage (retenue axiale du tuyau par rapport à l'embout).

Selon une disposition avantageuse, chaque zone de support présente un renfoncement de calage qui s'étend transversalement à la bande de l'agrafe, d'un bord longitudinal à l'autre de cette dernière.

Les bandes des colliers peuvent être insérées dans ces renfoncements de calage qui les empêchent de glisser dans la direction longitudinale de l'agrafe.

La patte élastique est particulièrement avantageuse lorsqu'elle est combinée aux renfoncements de calage évoqués précédemment.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 montre un système de serrage comprenant une agrafe et deux colliers, disposés autour d'un tuyau représenté en coupe longitudinale, lui-même emmanché sur un embout représenté en vue extérieure,
- la figure 2 est une vue en élévation du système de serrage de la figure 1,
- la figure 3 est une vue de côté de la figure 2, selon la flèche III,
- la figure 4 est une vue en perspective du système de la figure 2, sur laquelle les colliers sont représentés partiellement et en trait interrompu, et
- les figures 5 et 6 sont deux vues analogues à la figure 1, montrant deux autres modes de réalisation de l'agrafe.

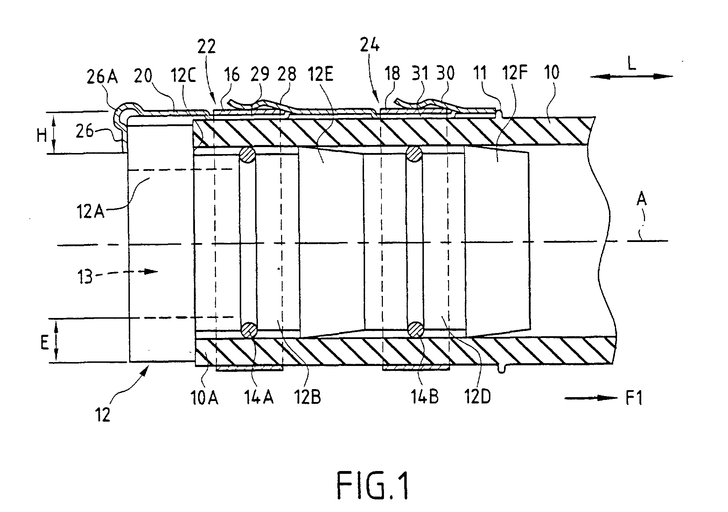

La figure 1 permet de mieux comprendre pourquoi, dans certains cas, il est important de positionner correctement les deux colliers de serrage l'un par rapport à l'autre et par rapport aux objets à serrer. Cette figure montre un tuyau 10, par exemple en caoutchouc, emmanché sur un embout 12. Dans l'exemple représenté, cet embout présente une extrémité libre 12A qui dépasse au-delà de l'extrémité libre 10A du tuyau. Dans la suite, l'extrémité libre 12A pourra également être dénommée "entrée" de l'embout. Ce dernier comprend une première portée cylindrique 12B raccordée à l'entrée 12A par un épaulement 12C, ainsi qu'une deuxième portée cylindrique 12D. Les portées cylindriques 12B et 12D portent chacune un joint d'étanchéité, respectivement 14A et 14B, ces joints étant disposés dans des gorges prévues à cet effet. L'embout comporte également une première indentation en sapin 12E qui est située entre les portées cylindriques 12B et 12D, ainsi qu'une deuxième indentation en sapin 12F située vers son extrémité libre opposée à son entrée 12A. Les indentations en sapin forment des reliefs qui facilitent l'accrochage de la périphérie interne du tuyau sur l'embout.

On comprend aisément que, à la fois pour obtenir la résistance mécanique à la traction du tuyau 10 par rapport à l'embout 12 et pour garantir l'étanchéité souhaitée, il est important que les efforts de serrage s'exercent autour des portées cylindriques 12B et 12D qui portent les joints 14A et 14B, et non autour des indentations 12E et 12F.

Le tuyau peut également être directement emmanché sur la portion d'extrémité d'un tube, conformée de manière à présenter des zones de serrage préférentielles, ce tube étant pourvu d'un épaulement sur lequel pourra prendre appui la partie coudée 26 évoquée plus loin.

Le système de serrage comprend ainsi deux colliers de serrage, respectivement 16 et 18, qui sont maintenus ensemble par une agrafe de liaison et d'entretoisement 20. Les deux colliers sont disposés dans des zones particulières de l'agrafe, dites zones de support 22 et 24, et sont donc maintenus espacés l'un de l'autre, de sorte qu'ils se situent effectivement autour des joints 14A et 14B. Les zones de support sont disposées dans un même plan et les colliers ont sensiblement le même diamètre de serrage.

Pour permettre une meilleure visualisation des différentes pièces les unes par rapport aux autres, la figure 1 montre l'état non serré des colliers. On comprend que lorsque des colliers sont serrés, leurs dimensions radiales diminuent, ce qui a pour effet de comprimer le tuyau autour de l'embout, en particulier autour des joints 14A et 14B, qui sont également comprimés.

Sur la figure 1, on voit que l'agrafe 20 présente une partie d'extrémité 26 qui est coudée, sensiblement à angle droit par rapport à sa direction longitudinale L. Cette partie coudée 26 peut coopérer en butée avec l'extrémité libre de l'embout à son entrée 12A afin de déterminer la position de l'ensemble constitué par l'agrafe 20 et par les colliers 16 et 18 par rapport à l'embout 12, ce qui permet de placer effectivement les colliers dans les régions souhaitées. Bien entendu, la hauteur H du coude 26 est déterminée de manière à éviter d'empiéter sur l'ouverture 13 de l'entrée de l'embout. Le coude 26 est équipé d'une nervure de rigidification 26A.

Lorsque le tuyau est serré sur l'extrémité libre d'un tube, la hauteur H sera déterminée pour éviter l'interférence avec le diamètre extérieur du tube à son extrémité libre, tout en permettant au coude 26 de venir prendre appui sur la face d'un épaulement du tube opposée à l'extrémité libre du tuyau.

La partie coudée 26 constitue un mode de réalisation particulièrement avantageux de la déformation de retenue. Celle-ci pourrait toutefois être réalisée différemment, par exemple par un bossage, un crevé ou analogue qui pourrait alors être situé dans une région de l'agrafe différente de son extrémité libre.

Dans l'exemple représenté, la zone de calage de l'objet à serrer qui coopère avec le coude 26 constituant les moyens de retenue de l'agrafe est formée par l'extrémité libre de l'embout qui présente une épaisseur E suffisante.

Chaque collier est réalisé à partir d'une bande enroulée sur elle-même autour d'un axe géométrique A qui, sur la figure 1, est également l'axe du tuyau 10 et celui de l'embout 12.

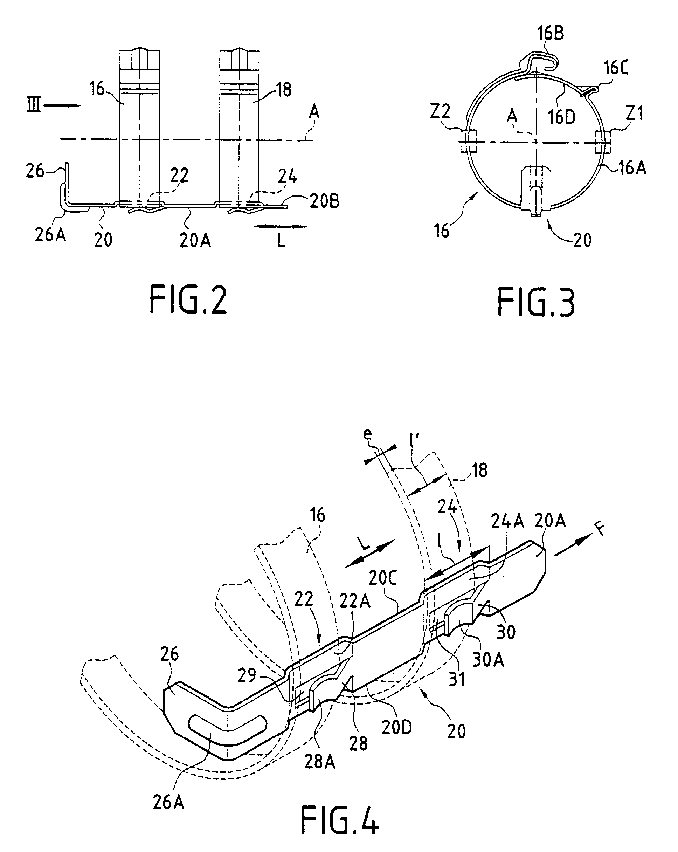

La conformation des colliers 16 et 18 est mieux visible sur les figures 2 et 3. Il s'agit de colliers du type connu par les demandes de brevet européen n° 3192 et n° 636 826.

Ainsi, le collier 16 visible sur la figure 3 est constitué par une bande 16A, par exemple une bande métallique plate, enroulée sur elle-même et dont une extrémité est pourvue d'un crochet 16B, tandis que l'autre extrémité est pourvue d'une oreille 16C formée par un pli double écrasé de la bande. Pour le serrage, le crochet 16B vient s'accrocher derrière l'oreille 16C et la continuité de l'appui du collier sur l'objet à serrer est assurée par une semelle 16D qui prolonge la bande sous le crochet 16B.

Bien entendu, l'invention peut également s'appliquer à d'autres types de collier. L'axe géométrique A du collier passe par le centre du cercle défini par l'enroulement de ce collier et est dirigé perpendiculairement au plan d'enroulement.

L'agrafe 20 est elle-même formée par une bande sensiblement rectiligne, par exemple une bande métallique ou en matière plastique. L'indication selon laquelle cette bande est sensiblement rectiligne signifie que l'agrafe est pratiquement uniquement constituée par un tronçon rectiligne sauf, éventuellement, dans la région des moyens de retenue (coude 26) et dans des zones localisées, dans lesquelles par exemple des saillies ou des renfoncements sont présents, ces zones localisées ne changeant pas la direction globale de ce tronçon.

On voit sur les figures 1 et 2 que, lorsque les colliers sont maintenus en place par rapport à l'agrafe, leur axe géométrique commun A est parallèle à la direction longitudinale L de l'agrafe.

Dans toute la suite, on considérera que la face extérieure 20A de l'agrafe est celle de ses faces qui, lorsque les colliers sont en place, est tournée à l'opposé de l'axe géométrique de ces colliers, tandis que sa face intérieure 20B est la face opposée, c'est-à-dire qu'elle est tournée vers l'axe géométrique des colliers et que, lorsque le système de serrage est en place sur un objet à serrer, cette face 20B se trouve contre cet objet. Le coude 26 est disposé de manière à faire saillie par rapport au plan général de la bande qui forme l'agrafe, du côté de la face 208.

Les zones de support 22 et 24 présentent, chacune, un renfoncement de calage, respectivement 22A et 24A. Ces renfoncements s'étendent transversalement à la bande de l'agrafe, d'un bord longitudinal 20C à l'autre bord longitudinal 20D de cette agrafe. Ces renfoncements forment des cuvettes de profondeur constante et sensiblement égale à l'épaisseur e de la bande des colliers. La longueur I des renfoncements est sensiblement égale ou très légèrement supérieure à la dimension l' des colliers mesurés selon leur axe géométrique A (en d'autres termes, cette dimension l' correspond à la largeur de la bande dans laquelle sont fabriqués les colliers). Ainsi, les bords des cuvettes 22A et 24A peuvent coopérer avec les bords des bandes dans lesquelles sont formés les colliers pour maintenir ces derniers en place.

Les cuvettes 22A et 24A sont formées en creux à partir de la face externe de l'agrafe, c'est-à-dire que, considérées à partir de la face interne 20B, elles forment des bossages.

Sur la figure 1, l'agrafe 20 comporte deux pattes élastiques, respectivement 28 et 30, qui, comme on le voit mieux sur les figures 1, 2 et 4, sont aptes à coopérer avec les faces extérieures des colliers 16 et 18 pour maintenir ces derniers en place dans les zones de support 22 et 24. Sur les figures 2 et 4, les pattes 28 et 30 sont formées par des languettes découpées dans la bande de l'agrafe de manière à s'étendre dans la direction longitudinale L de cette dernière. Les découpes 29 et 31 dans lesquelles sont formées ces languettes sont réalisées dans le fond des renfoncements 22A, 24A et présentent trois côtés, respectivement deux côtés longitudinaux et un côté transversal à la bande. Les languettes sont simplement relevées vers l'extérieur par rapport à ces découpes. Ces languettes présentent, chacune, une zone d'appui, respectivement 28A et 30A qui, considérée depuis la face intérieurs de l'agrafe, est convexe. Dans l'exemple représenté, les languettes 28 et 30 sont rattachées à la bande du côté opposé au coude 26. Dans ces conditions, on comprend que les colliers peuvent être remis en place par rapport à l'agrafe en les insérant sous les languettes 28 et 30 et en les faisant coulisser dans le sens de la flèche F de la figure 4.

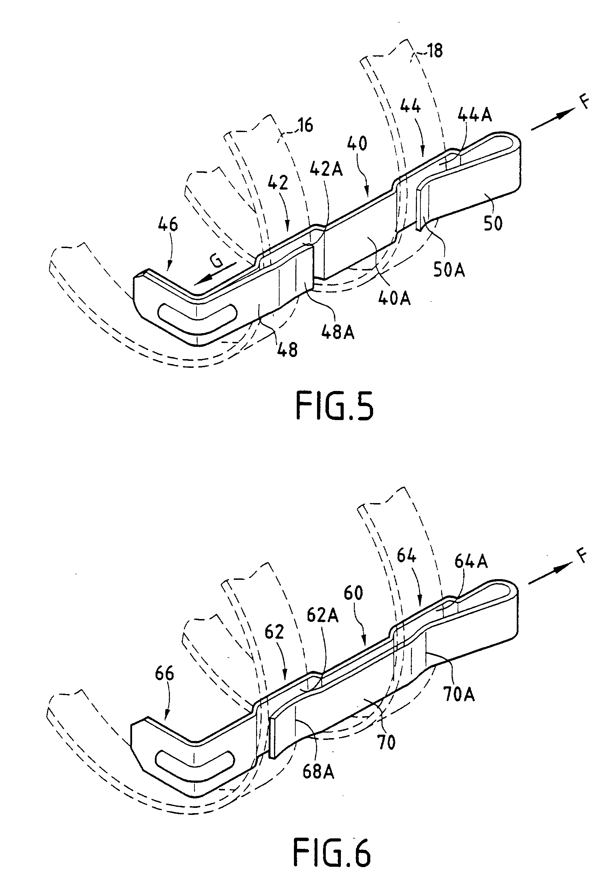

L'agrafe 40 représentée sur la figure 5 est globalement analogue à l'agrafe 20. Toutefois, sur la figure 5, les pattes élastiques sont formées différemment. Ainsi, aucune découpe n'est pratiquée dans le fond des cuvettes 42A et 44A des zones de support 42 et 44, mais les pattes sont formées par des replis longitudinaux formés à partir des extrémités de la bande. Ainsi, le coude 46, qui joue un rôle analogue au coude 26 précité, forme un repli écrasé, qui se termine par une patte 48 qui revient contre la face supérieure 40A de l'agrafe. C'est ce repli 48 qui joue le rôle de la patte élastique maintenant le collier 16 contre le fond de la cuvette 42A.

L'autre extrémité de l'agrafe comporte également un repli qui revient sur la face supérieure de cette agrafe pour former la deuxième patte élastique 50 qui sert à maintenir le collier 18 contre le fond de la cuvette 44A.

Le collier 16 est inséré sous la patte 48 en le faisant coulisser dans le sens de la flèche G, tandis que le collier 18 est inséré sous la patte 50 en le faisant coulisser dans le sens de la flèche F.

Comme les pattes 28 et 30, les pattes 48 et 50 présentent les zones d'appui 48A et 50A qui sont convexes vues de la face intérieure de l'agrafe.

Bien entendu, on pourrait prévoir que seule la patte d'appui servant à l'un des colliers, par exemple la patte 50, soit formée comme sur la figure 5, tandis que, pour l'autre collier, une patte analogue à la patte 28 de la figure 4 serait prévue.

Sur la figure 6, on voit un mode de réalisation qui utilise également un repli longitudinal formé à partir d'une extrémité de la bande. Plus précisément, dans l'exemple de la figure 6, le repli 70 est formé à partir de l'extrémité de l'agrafe opposée au coude 66, qui remplit la même fonction que le coude 26 de l'agrafe des figures 1 à 4. Ce repli 70 s'étend contre la face externe de l'agrafe, sur une longueur suffisante pour parvenir en regard de la zone de support 62 la plus proche du coude 66. Cette patte 70 présente deux zones d'appui, respectivement formées par une première ondulation 68A située en regard de la zone de support 62 et par une deuxième ondulation 70A située en regard de la zone de support 64. Ces ondulations ont leur convexité tournée du côté de la face intérieure de l'agrafe et ont tendance, en l'absence des colliers 16 et 18, à pénétrer dans les cuvettes 62A et 64A.

L'agrafe de l'invention peut être réalisée de manière très simple à partir d'une bande de matériau, par exemple en métal, par un pliage éventuellement combiné à des emboutissages (nervure 26A) ou des découpes (découpes 29, 31). L'ensemble constitué par les deux colliers 16 et 18 maintenus ensemble par une agrafe 20, 40 ou 60, peut être mis en place comme un seul bloc autour des objets à serrer. Par exemple, en se reportant à la figure 1, on comprend que l'on peut d'abord emmancher le tuyau 10 sur l'embout 12, puis mettre en place l'ensemble constitué par l'agrafe 20 et les deux colliers 16 et 18 en les enfilant sur l'embout et le tuyau dans le sens de la flèche F1.

De manière alternative, on peut envisager de prépositionner le bloc constitué par l'agrafe 20 et les colliers 16 et 18 sur le tuyau 10 puis d'emmancher le tuyau supportant ce bloc sur l'embout 12 dans le sens opposé au sens de la flèche F1, en faisant légèrement basculer si nécessaire le coude 26 pour passer l'épaulement 12C. Dans ce cas de prépositionnement, le tuyau 10 et l'agrafe 20 comportent avantageusement des moyens pour déterminer la position de l'agrafe, avec les colliers 16 et 18 qu'elle maintient ensemble, par rapport au tuyau 10, indépendamment de l'embout 12. Par exemple, le tuyau peut comporter un bourrelet 11 ménagé à une distance donnée de son extrémité libre, de manière à venir en butée avec l'agrafe du côté opposé au coude 26. On peut également équiper le tuyau d'un marquage ou d'un autre mode de repérage permettant de repérer approximativement la position de l'ensemble constitué par l'agrafe 20 des colliers 16 et 18, et de régler définitivement la position seulement une fois le tuyau emmanché sur l'embout.

Une autre possibilité consisterait à mettre d'abord en place le bloc constitué par l'agrafe et les colliers sur l'embout (en particulier lorsqu'il s'agit d'un tube muni d'un épaulement), avant d'emmancher le tuyau en l'insérant entre l'embout et les colliers, puis de serrer les colliers.

On peut en outre prévoir d'équiper les colliers et l'agrafe de moyens complémentaires pour repérer la position angulaire des colliers par rapport à l'agrafe.

En outre, on peut choisir d'utiliser deux agrafes plutôt qu'une seule pour maintenir ensemble les deux colliers. Dans un tel cas, les deux agrafes seront avantageusement sensiblement diamétralement opposées et pourront par exemple se situer dans les zones Z1 et Z2 repérées sur la figure 3, éloignées des crochets des colliers.

## Revendications

1. Agrafe de liaison et d'entretoisement (20, 40, 60) pour deux colliers de serrage (16, 18), destinés à être disposés sur un objet à serrer et comprenant, chacun, une bande enroulée sur elle-même, l'agrafe étant formée par une bande sensiblement rectiligne présentant deux zones de support (22, 24 ; 42, 44 ; 62, 64) distinctes espacées dans le sens de la longueur (L) de ladite bande, chacune de ces zones présentant des moyens de maintien en position (22A, 24A, 28, 30 ; 42A, 44A, 48, 50 ; 62A, 64A, 70) aptes à coopérer avec un collier de serrage (16, 18) pour maintenir ce dernier dans une position dans laquelle l'axe géométrique (A) du collier est parallèle à la direction longitudinale (L) de l'agrafe, cette dernière présentant des moyens de retenue préformés (26 ; 46 ; 66), aptes à coopérer avec l'objet à serrer (12) pour retenir ladite agrafe par rapport à cet objet, au moins vis-à-vis d'un déplacement dans le sens de la longueur de l'agrafe,
**caractérisée en ce qu'**elle présente, dans chacune desdites zones de support (22, 24 ; 42, 44 ; 62, 64), au moins une patte élastique (28, 30 ; 48, 50 ; 70), sous laquelle un collier (16, 18) peut être inséré en coulissant (F, G) parallèlement à la direction longitudinale (L) de la bande, ladite patte coopérant avec la face extérieure du collier pour le maintenir dans la zone de support.

2. Agrafe selon la revendication 1, **caractérisée en ce que** les moyens de retenue comprennent au moins une déformation de calage (26 ; 46 ; 66) faisant saillie sur une face longitudinale (20B) de la bande dans laquelle est formée l'agrafe.

3. Agrafe selon la revendication 2, **caractérisée en ce qu'**elle présente une partie d'extrémité (26 ; 46 ; 66) coudée sensiblement à angle droit par rapport à sa direction longitudinale (L).

4. Agrafe selon l'une quelconque des revendications 1 à 3, **caractérisée en ce que** chaque zone de support (22, 24) présente un renfoncement de calage (22A, 24A ; 42A, 44A ; 62A, 64A) qui s'étend transversalement à la bande de l'agrafe (20), d'un bord longitudinal (20C, 20D) à l'autre de cette dernière.

5. Agrafe selon l'une quelconque des revendications 1 à 4, **caractérisée en ce qu'**elle présente au moins une patte élastique (28, 30) formée par une languette, découpée dans la bande formée par ladite agrafe (20) et s'étendant dans la direction longitudinale (L) de cette dernière.

6. Agrafe selon les revendications 4 et 5, **caractérisée en ce que** le fond du renfoncement (22A, 24A) présente une découpe (29, 31), par rapport à laquelle la languette (28, 30) est relevée vers l'extérieur.

7. Agrafe selon l'une quelconque des revendications 1 à 4, **caractérisée en ce qu'**elle présente au moins une patte élastique (48, 50, 70) constituée par un repli longitudinal formé à une extrémité de la bande formée par l'agrafe.

8. Agrafe selon la revendication 7, **caractérisée en ce qu'**elle présente une seule patte élastique (70) ayant deux zones d'appui formées par des ondulations (68A, 70A) respectivement situées en regard de chacune des zones de support (62, 64).

9. Agrafe selon l'une quelconque des revendications 1 à 8, **caractérisée en ce que** la patte élastique (28, 30 ; 48, 50 ; 70) présente une zone d'appui (28A, 30A ; 48A, 50A ; 68A, 70A) qui considérée depuis la face intérieure de l'agrafe, est convexe.

10. Système de serrage comprenant deux colliers de serrage (16, 12) comprenant, chacun, une bande de métal enroulée sur elle-même, **caractérisé en ce qu'**il comporte, en outre, au moins une agrafe de liaison (20, 40, 60) et d'entretoisement selon l'une quelconque des revendications 1 à 9.

## Patentansprüche

1. Klammer zum Verbinden und Versteifen (20, 40, 60) für zwei Klemmschellen (16, 18), die zur Anordnung auf einem Objekt, das zusammengeklemmt werden soll, bestimmt sind und jeweils einen in sich selbst aufgerollten Streifen umfassen, wobei die Klammer aus einem im Wesentlichen geradlinigen Streifen gebildet ist, der zwei verschiedene Trägerbereiche (22, 24; 42, 44; 62, 64) aufweist, die im Abstand in Richtung der Länge (L) des Streifens angeordnet sind, wobei jeder dieser Bereiche Mittel zum In-Position-Halten (22A, 24A, 28, 30 ; 42A, 44A, 48, 50; 62A, 64A, 70) aufweist, die mit einer Klemmschelle (16, 18) zusammenwirken können, um letztere in einer Position zu halten, in der die geometrische Achse (A) der Schelle parallel zur Längsrichtung (L) der Klammer ist; wobei letztere vorgeformte Mittel zum Halten (26; 46; 66) aufweist, die mit dem zusammenzuziehenden Objekt (12) zusammenwirken können, um die Klammer bezüglich diesem Objekt zu halten, wenigstens gegenüber einer Verschiebung in Richtung der Länge der Klammer,
**dadurch gekennzeichnet, dass** sie in jedem der Trägerbereiche (22, 24 ; 42, 44 ; 62, 64) wenigstens einen elastischen Haken (28, 30 ; 48, 50 ; 70) aufweist, unter dem eine Schelle (16, 18) parallel gleitend (F, G) zur Längsrichtung (L) des Streifens eingefügt werden kann, wobei der Haken mit der Außenseite der Schelle zusammenwirkt, um sie im Trägerbereich zu hatten.

2. Klammer nach Anspruch 1, **dadurch gekennzeichnet, dass** die Mittel zum Halten wenigstens eine Einstellungsverformung (26 ; 46 ; 66) aufweisen, die auf einer Längsseite (20B) des Streifens hervorragt, in dem die Klammer gebildet ist.

3. Klammer nach Anspruch 2, **dadurch gekennzeichnet, dass** sie ein Endteil (26 ; 46 ; 66) aufweist, das im Wesentlichen im rechten Winkel bezüglich seiner Längsrichtung (L) gebogen ist.

4. Klammer nach einem der Ansprüche 1 bis 3, **dadurch gekennzeichnet, dass** jeder Trägerbereich (22, 24) eine Einstellungsvertiefung (22A, 24A ; 42A, 44A ; 62A, 64A) aufweist, die sich quer zum Streifen der Klammer (20), von einem Längsrand (20C, 20D) zum anderen von letzerer erstreckt.

5. Klammer nach einem der Ansprüche 1 bis 4, **dadurch gekennzeichnet, dass** sie wenigstens einen durch eine Zunge gebildeten elastischen Haken (28, 30) aufweist, der in den durch die Klammer (20) gebildeten Streifen geschnitten ist und sich in Längsrichtung von letzterer erstreckt.

6. Klammer nach den Ansprüchen 4 und 5, **dadurch gekennzeichnet, dass** der Boden der Vertiefung (22A, 24A) einen Einschnitt (29, 31) aufweist, bezüglich dem die Zunge (28, 30) nach außen gehoben ist.

7. Klammer nach einem der Ansprüche 1 bis 4, **dadurch gekennzeichnet, dass** sie wenigstens einen elastischen Haken (48, 50, 70) aufweist, der durch eine Längsfalte hergestellt ist, die an einem Ende des durch die Klammer gebildeten Streifens gebildet ist.

8. Klammer nach Anspruch 7, **dadurch gekennzeichnet, dass** sie einen einzigen elastischen Haken (70) mit zwei Druckbereichen aufweist, die durch Wellungen (68A, 70A) gebildet sind, die jeweils gegenüber von jedem der Trägerbereiche (62, 64) liegen.

9. Klammer nach einem der Ansprüche 1 bis 8, **dadurch gekennzeichnet, dass** der elastische Haken (28, 30 ; 48, 50 ; 70) einen Druckbereich (28A, 30A ; 48A, 50A ; 68A, 70A) aufweist, der, von der Innenseite der Klammer her betrachtet, konvex ist.

10. Klemmsystem mit zwei Klemmschellen (16, 12), die jeweils einen in sich selbst aufgerollten Metallstreifen aufweisen, **dadurch gekennzeichnet, dass** es außerdem wenigstens eine Klammer zum Verbinden (20, 40, 60) und Versteifen nach einem der Ansprüche 1 bis 9 aufweist.

## Claims

1. Connecting and bracing clip (20, 40, 60) for two clamping collars (16, 18) intended to be arranged on an object to be clamped and each comprising a strip wound on itself, the clip being formed of a substantially rectilinear strip presenting two distinct support zones (22, 24; 42, 44; 62, 64) spaced in the direction of the length (L) of the said strip, each of these zones presenting means for holding in position (22A, 24A, 28, 30; 42A, 44A, 48, 50; 62A, 64A, 70) able to co-operate with a clamping collar (16, 18) to hold this in a position in which the geometrical axis (A) of the collar is parallel with the longitudinal direction (L) of the clip, the latter presenting preformed retaining means (26; 46; 66) able to co-operate with the object to be clamped (12) to retain the said clip relative to this object, at least with regard to displacement in the direction of the length of the clip,
**characterised by** the fact that, in each of the said support zones (22, 24; 42, 44; 62, 64) it presents at least one elastic tab (28, 30; 48, 50; 70), under which a collar (16, 18) can be inserted by sliding (F, G) parallel with the longitudinal direction (L) of the strip, the said tab co-operating with the external face of the collar to hold it in the support zone.

2. Clip as described in claim 1, **characterised by** the fact that the retaining means comprise at least one chocking deformation (26; 46; 66) projecting from a longitudinal face (20B) of the strip from which the clip is formed.

3. Clip as described in claim 2, **characterised by** the fact that it presents an end part (26; 46; 66) bent substantially at a right-angle relative to its longitudinal direction (L).

4. Clip as described in any one of claims 1 to 3, **characterised by** the fact that each support zone (22, 24) presents a chocking recess (22A, 24A; 42A, 44A; 62A, 64A) which extends transversally to the strip of the clip (20) from one longitudinal edge (20C, 20D) to the other of the latter.

5. Clip as described in any one of claims 1 to 4, **characterised by** the fact that it presents at least one elastic tab (28, 30) formed of a tongue, cut out of the strip formed by the said clip (20) and extending in the longitudinal direction (L) of the latter.

6. Clip as described in claims 4 and 5, **characterised by** the fact that the bottom of the recess (22A, 24A) presents a cut-out (29, 31), relative to which the tongue (28, 30) is raised outwardly.

7. Clip as described in any one of claims 1 to 4, **characterised by** the fact that it presents at least one elastic tab (48, 50, 70) consisting of a longitudinal bend formed at one end of the strip formed by the clip.

8. Clip as described in claim 7, **characterised by** the fact that it presents a single elastic tab (70) having two bearings zones formed by undulations (68A, 70A) situated opposite each of the support zones (62, 64) respectively.

9. Clip as described in any one of claims 1 to 8, **characterised by** the fact that the elastic tab (28, 30; 48, 50; 70) presents a bearing zone (28A, 30A; 48A, 50A; 68A, 70A) which, considered from the inside face of the clip, is convex.

10. Clamping system comprising two clamping collars (16, 12), each comprising a metal strip wound on itself, **characterised by** the fact that it also includes at least one connecting (20, 40, 60) and bracing clip as described in any one of claims 1 to 9.
